# EUROPEAN PATENT SPECIFICATION

(11) **EP 2 934 919 B1**
(45) Date of publication and mention of the grant of the patent: **20.02.2019**
(21) Application number: 13826938.6
(22) Date of filing: 18.12.2013
(51) Int. Cl.: B60C 11/04, B60C 11/13

(54) **TYRE FOR HEAVY LOAD VEHICLE WHEELS**
REIFEN FÜR SCHWERLASTFAHRZEUGRÄDER
PNEU POUR ROUES DE VÉHICULES POIDS LOURD

(30) Priority: 21.12.2012 IT RM20120658; 21.03.2013 US 201361803984 P
(43) Date of publication of application: 28.10.2015
(73) Proprietor: Pirelli Tyre S.p.A., 20126 Milano (IT)
(72) Inventor: CASTELLINI, Alessandro, I-20126 Milano (IT)
(74) Representative: Fabiano, Piero
(86) International application number: PCT/IB2013/002799
(87) International publication number: WO 2014/096935

(56) References cited:
- FR-A1- 2 930 911
- JP-A- S61 166 708
- KR-A- 20100 060 943

## Description

### FIELD OF THE INVENTION

The present invention relates to a tyre for vehicle wheels, particularly for heavy load vehicle wheels.

### PRIOR ART

In the technical field of tyres, documents EP227322, US 6,000,451, EP2116397, US20050230020 relate to tyres for heavy load vehicle wheels. Further documents in the same field are FR2930911, corresponding with the preamble of claim 1, and JPS61-166708.

### SUMMARY OF THE INVENTION

Tyres intended for use with heavy load vehicles are typically required to have excellent features as to traction, directionality and controllability both on wet and on dry ground.

Another feature required of this kind of tyres is a reduced and/or as far as possible even wear, so as to increase the performance of the tyres in terms of mileage and to reduce noise and vibrations while running.

A further feature required of this kind of tyres, and particularly of tyres for steer axles, is to avoid the trapping of small stones and/or stone chippings into the grooves. It is possible, in fact, for stones or stone chippings to penetrate into the longitudinal and transverse grooves of the tread band when running or maneuvering, above all on less asphalted or deteriorated roads or on yards for switching goods.

The width of the grooves, typically of between about 8 mm and 20 mm, is such that stones can easily penetrate into them, pushed by the pressure generated by the footprint on the road, and remain trapped therein. The centrifugal force while the tyre is rolling cannot be high enough to cause them to be expelled.

When running on compact asphalt or concrete grounds, the cyclic deformation stones against the bottom and the walls of the groove in which they are trapped and may trigger tears in the elastomeric material (event known as "stone drilling"). Such tears can degenerate into large cracks extending up to the first belt layer of the tyre. In this case the tyre has to be removed and repaired or replaced.

For partially avoiding this drawback, it is known to form projections, known in the field as stone-ejectors, in the bottom of the tread grooves, said projections being adapted to prevent the trapping of stones and favor their expulsion.

Each of the above-mentioned features is partially conflicting with the others. The presence of stone-ejectors, in fact, on the one hand protects the bottom of the grooves, avoiding the trapping of small stones and/or stone chippings and safeguards the same against the possible triggering of tears, on the other hand reduces the tyre performance, particularly when running on wet grounds.

The presence of a stone-ejector, particularly when it has considerable dimensions, reduces directionality and controllability in tyres intended for use on steer axles and traction and pickup in tyres intended for use on traction axles.

The Applicant has noticed, in fact, that in the footprint area the grooves are subjected to a deformation which tends to close them and to bring the axially opposite lateral walls of the groove closer to the lateral walls of the stone-ejector, up to causing a mutual contact, thus obstructing the flow of water.

The Applicant has found that the reciprocally conflicting problems discussed above are solved by means of a tread pattern comprising a central annular portion and two shoulder annular portions, the central annular portion being separated from each shoulder annular portion by a respective circumferential shoulder groove. The central annular portion comprises at least one circumferential crown groove; at least one of said circumferential shoulder and/or crown grooves comprises a rib or stone-ejector, provided with a plurality of radial channels.

According to the present invention, there is the provision of a tyre with the features of claim 1.
- By "average depth of a groove or slot" it is meant the arithmetic mean of the local depths of the groove or slot itself measured along the extension thereof or along the extension of the groove or slot segment being considered;
- By "average width of a groove or slot" it is meant the arithmetic mean of the local widths of the groove or slot itself measured along the extension thereof or along the extension of the groove or slot segment being considered;
- By "equatorial plane" of the tyre it is meant a plane perpendicular to the rotation axis of the tyre and dividing the tyre into two symmetrically equal portions.
- By "circumferential" direction it is meant a direction generically directed according to the rotation direction of the tyre, or in any case only slightly inclined relative to the rotation direction of the tyre.
- By "axial" direction or "axially" it is meant a direction parallel to, or in any case only slightly inclined relative to the rotation axis of the tyre.
- By "radial" direction or "radially" it is meant a direction substantially orthogonal to the rotation axis of the tyre.
- By pitch of the tyre it is meant the series of grooves and rubber portions arranged so as to form a pattern on the tread band, which is repeated substantially the same and without interruption along the circumferential development of the tread band. The pitches may have different circumferential lengths along the circumferential development of the tread band.

Advantageously, the protrusions may have at least one top surface from which at least one channel of the plurality of channels extends.

Preferably, at least one channel of the plurality of channels may extend from the top surface of the protrusions by at least 0,2H.

Advantageously, at least one channel of the plurality of channels may extend from the top surface of the protrusions to the bottom of the circumferential shoulder and/or crown groove.

In this way each radial channel, thus arranged substantially vertically relative to the circumferential direction of the groove, is in fluid communication with a circumferential channel, represented by the groove, and water can be discharged in both directions.

Conveniently, the channels have a cross section which can be inscribed in a circumference having a maximum diameter dmax smaller than 11 mm. Preferably, the channels may have a cross section which can be inscribed in a circumference having a maximum diameter dmax greater than 1 mm.

The Applicant is of the opinion that the above-mentioned choices in terms of extension and dimension of the channels represent an optimal compromise for providing a proper flow rate for the water flowing through the channels while taking into account the need of avoiding an excessive structural weakening of the protrusions of the plurality of protrusions.

Conveniently, the channels may be arranged in an axial direction on opposite sides relative to a center line of the protrusion itself.

Conveniently, also in order to obtain a uniform distribution of the channels and thus of their draining effect, in each protrusion the preferably radial channels are circumferentially staggered.

Preferably, each protrusion may comprise a number of channels between zero and six.

Preferably, the ratio between the number of channels and the number of protrusions overall present in a shoulder and/or crown groove is equal to or greater than 0.1, even more preferably greater than 0.5.

Preferably, the ratio between the number of channels and the number of protrusions overall present in a shoulder and/or crown groove is between 1 and 5.

Conveniently, each protrusion may be separated from a circumferentially adjacent one by a transverse slot.

Conveniently, the top surface of the rib coincides with the series of the top surfaces of the protrusions of the plurality of protrusions.

Conveniently, at least one protrusion of the plurality of protrusions may have a cross section s greater than 0,2S, where S is the cross section of the circumferential groove measured in a lying plane common to both the cross sections.

The presence of a rib or stone-ejector of relevant dimensions, which preferably takes up almost completely the circumferential groove, has the advantage of reducing the movements and deformations of the tread pattern, particularly in the footprint area when the opposite parallel walls of the groove tend to come into contact with those of the stone-ejector. This causes a noticeable reduction in the rolling resistance, which is tightly linked with the deformability of the structural elements of the tread band.

Advantageously, in order to increase the draining ability of the tyre, above all in the footprint area, at least one circumferential shoulder and/or crown groove in which the plurality of protrusions is located may comprise at least one circumferential channel.

Preferably, said circumferential channel may be in fluid communication with at least one radial channel of the plurality of preferably radial channels provided on the plurality of protrusions.

Conveniently, the circumferential channel may be located at the circumferential groove portion comprised between the groove bottom and the groove lateral wall.

Advantageously, the circumferential channel may extend circumferentially along the whole circumferential development of the tyre.

For not structurally weakening the rib, the circumferential channel may have an asymmetric cross section extending in an axially outer direction relative to the plurality of protrusions.

The tyre of the invention has an excellent behavior when running on roads, in case both of dry and wet ground, as well as a good traction along its whole service life.

The excellent traction and directionality features of the tyre according to the present invention make the same particularly suitable for fitting both on traction and on steer axle wheels of heavy load vehicles.

Moreover, the tyre of the invention also has features of low rolling resistance and wear evenness, which make the same suitable for fitting on wheels of heavy load vehicles intended to travel long distances on motorways or highways.

Further features and advantages of the invention will now be presented with reference to embodiments shown as non-limiting examples in the accompanying figures, wherein:

### BRIEF DESCRIPTION OF THE DRAWINGS

- Fig. 1 shows a sectional view of an embodiment of a tyre according to the present invention;
- Fig. 2a shows a plan view of an embodiment of a tread of a tyre not forming part of the present invention, comprising a plurality of protrusions distributed along a circumferential direction in two crown grooves;
- Fig. 2b shows a plan view of an embodiment of a tread of a tyre according to the present invention, comprising a rib comprising a plurality of protrusions distributed along a circumferential direction in two crown grooves;
- Fig. 3a shows an enlarged perspective view of a groove of a tyre not forming part of the present invention comprising a plurality of protrusions distributed along a circumferential direction in two crown grooves;
- Fig. 3b shows an enlarged perspective view of a groove of an embodiment of a tyre according to the present invention comprising a rib comprising a plurality of protrusions distributed along a circumferential direction in two crown grooves;
- Figs 4a, 4b, 4c show three sectional views of the groove and of the protrusions contained therein of figure 2b at three different circumferential locations, in a tread band portion not in the footprint area, respectively taken along the section lines A-A; B-B; C-C of figure 2b; and
- Figs 5a, 5b, 5c show three sectional views of the groove and of the protrusions contained therein of figure 2b at the three locations of figures 4a, 4b, 4c respectively, in a tread band portion in the footprint area;
- Figs 6a, 6b show two sectional views of a groove and of the respective protrusions according to a different embodiment of the tyre at two different circumferential locations, in a tread band portion not in the footprint area;
- Figs 7a, 7b show two sectional views of the groove and the respective protrusions of figures 6a and 6b respectively, in a tread band portion in the footprint area.

### DETAILED DESCRIPTION OF EMBODIMENTS OF THE INVENTION

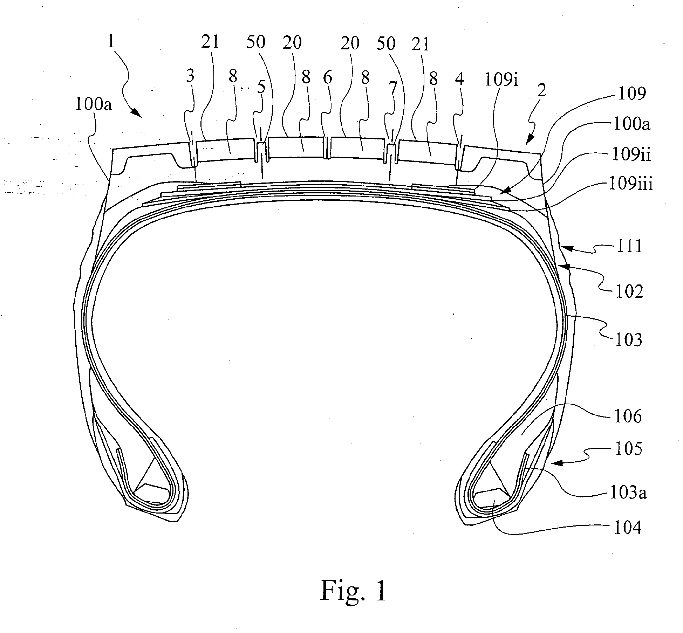

In figure 1 a tyre for vehicle wheels according to the present invention, in particular a tyre intended for traction or steer axle wheels of a heavy load vehicle, is generally indicated at 1.

In the following description and in the appended claims, by the expression: "heavy load vehicle" it is meant a vehicle belonging to classes M2∼M3, N2∼N3 and O2∼O4 defined in "Consolidated Resolution of the Construction of Vehicles (R.E.3) (1997)", Annex 7, pages 52-59, "Classification and definition of power-driven vehicles and trailers", such as for example trucks, lorries, tractors, busses, vans and other vehicles of this kind.

The tyre 1 comprises a carcass structure 102, including at least one carcass ply 103, preferably two carcass plies 103, formed by reinforcing cords, typically made of metal, incorporated into an elastomeric matrix.

The carcass ply 103 has opposite end edges 103a engaged with respective bead rings 104. The latter are located in regions 105 of the tyre 1 usually called "beads".

An elastomeric filling 106 taking up the space defined between the carcass ply 103 and the respective end edge 103a of the carcass ply 103 is applied onto the outer perimeter edge of the bead rings 104. The bead rings 104 hold the tyre 1 firmly fixed to an anchoring seat provided for this purpose in the wheel rim, thus preventing the bead 105 from coming out from such a seat during operation.

At the beads 105 specific reinforcing structures (not shown) may be provided, which have the function of improving the torque transmission to the tyre 1.

In a radially outer position relative to the carcass structure 102 a belt structure 109 is provided, which preferably comprises several belt layers (three layers 109i, 109ii, 109iii are shown in this specific example) arranged radially one on top of the other and having reinforcing cords, typically made of metal, with a crossed orientation and/or substantially parallel to the direction of circumferential development of the tyre 1.

A tread band 2, made as well of an elastomeric material, is applied in a radially outer position relative to the belt structure 109.

On the lateral surfaces of the carcass structure 102 respective sidewalls 111 made of an elastomeric material are further applied, each extending from one of the opposite lateral edges 100a of the tread band 2 up to the respective annular structure 104 for anchoring to the beads 105.

Referring to figures 1-2, the tread band 2 comprises a central portion L1 and two shoulder portions L2.

In the following presentation reference will be made to a tread band for traction axle wheels, however the same applies to tread bands for steer axle wheels without departing from the scope of protection of the present invention.

In fact, steer axle and trailer tyres have a tread pattern typically comprising at least four annular regions of substantially solid rubber separated from one another by at least three circumferential grooves, while traction axle tyres have a tread patter wherein the circumferential grooves are connected with substantially transverse or axial grooves so as to define more mobile and deformable blocks for ensuring traction.

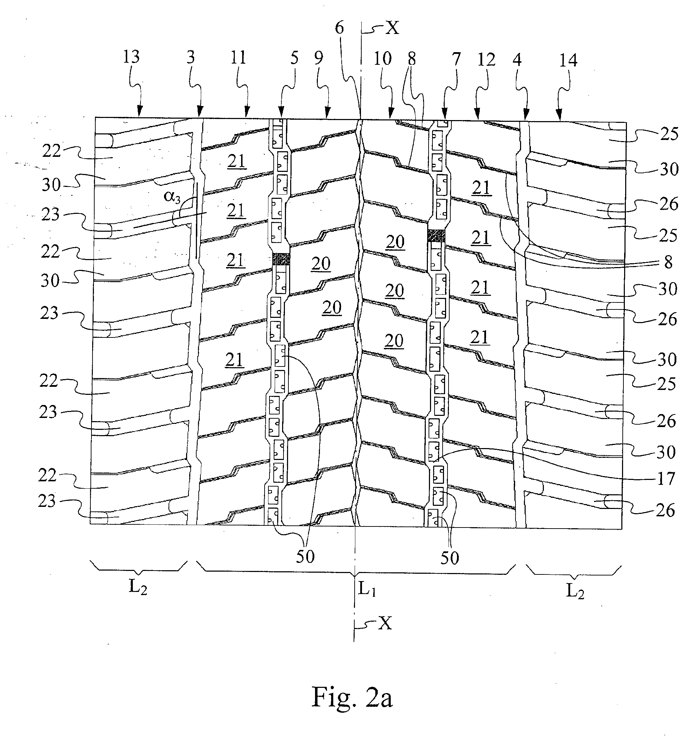

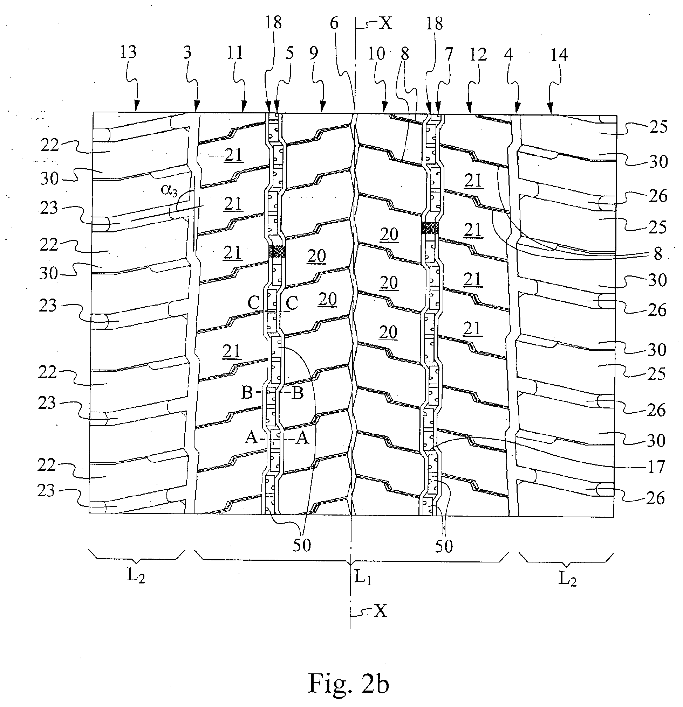

Specifically, referring to figure 2, it can be seen that the central portion L1, located across the equatorial plane X-X, is visually separated from the shoulder portions L2 by two circumferential shoulder grooves 3, 4.

The circumferential shoulder grooves 3, 4 are the axially outermost circumferential grooves in the tread band.

The circumferential shoulder grooves 3, 4 are mainly provided for ensuring the drainage of water in the footprint area, particularly when the tyre is running on a straight path.

For this purpose, the circumferential shoulder grooves 3, 4 may have an average width greater than 2 mm. Preferably, the circumferential grooves 3, 4 may have an average width greater than 3 mm, in any case smaller than 20 mm, preferably smaller than 15 mm, for example equal to 7 mm. Advantageously, the circumferential shoulder grooves 3, 4 may have a depth greater than 10 mm, preferably greater than 15, in any case smaller than 30 mm, for example equal to 18 mm.

The choice of providing the circumferential shoulder grooves 3, 4 with a relevant depth allows good drainage features to be achieved.

More preferably, the circumferential shoulder grooves 3, 4 do not have circumferentially a straight course, but a swerved one.

In other words, the circumferential shoulder grooves 3, 4 preferably extend over the whole circumferential development of the tyre 1 with a course forming a broken line wherein first circumferential segments with a reduced inclination relative to the equatorial plane X-X or parallel thereto and second circumferential segments counter-inclined relative to the equatorial plane X-X are present. The second segments extend so as to connect said first segments with each other. In this way, the traction of the tread band 2 in the advancing direction of the tyre is advantageously increased.

Moving axially towards the equatorial plane X-X, the tread band has two circumferential crown grooves 5, 7 located axially inwardly relative to the two circumferential shoulder grooves 3, 4.

The circumferential crown grooves 5, 7 may have an average width greater than the circumferential shoulder grooves 3, 4.

Preferably, the circumferential crown grooves 5, 7 have an average width greater than 2 mm. Preferably, the circumferential crown grooves 5, 7 may have an average width greater than 3 mm, in any case smaller than 25 mm, for example equal to 12 mm.

Advantageously, the circumferential crown grooves 5, 7 may have a depth greater than 10 mm, preferably greater than 15, in any case smaller than 30 mm, for example equal to 18 mm.

The choice of providing the circumferential crown grooves 5, 7 with a relevant depth and width allows good drainage features to be achieved.

More preferably, the circumferential crown grooves 5, 7, as well as the circumferential shoulder grooves 3, 4, do not have circumferentially a straight course, but a swerved one.

In other words, the circumferential crown grooves 5, 7 preferably extend over the whole circumferential development of the tyre 1 with a course forming a broken line wherein first circumferential segments parallel to the equatorial plane X-X and second circumferential segments inclined relative to the equatorial plane X-X and connecting said first segments with each other are present. In this way, the traction of the tread band 2 in the advancing direction of the tyre is advantageously increased.

A central circumferential crown groove 6 may be preferably located across the equatorial plane X-X of the tyre.

The central circumferential crown groove 6 has a substantially "zigzag" course, comprising a plurality of first inclined segments 6a alternated with a plurality of second segments 6b counter-inclined relative to the first inclined segments 6a.

Preferably, the maximum depth of the tread band 2 (and thus the maximum depth of the circumferential grooves 3, 4, 5, 6, 7 and of the transverse sipes 8 described below) is between about 10 mm and about 25 mm, such a depth being more preferably equal to about 22 mm.

The central portion L1 is designed so as to provide a low rolling resistance and wear evenness during the entire service life of the tyre.

In detail, in the embodiment shown in figures 1-2, the central portion L1 has four circumferential rows 9, 10, 11, 12 of circumferential blocks, two circumferential rows 9, 10 of central blocks 20 and two circumferential rows 11, 12 of lateral blocks 21.

The circumferential rows 11, 12 of lateral blocks 21 are located outwardly relative to the circumferential rows 9, 10 of central blocks, so that each circumferential row 11, respectively 12, of lateral blocks 21 is separated from a circumferential row 9, respectively 10, of central blocks by a circumferential groove 5, respectively 7.

In the embodiment of figures 1, 2, the first circumferential row 11 of lateral blocks 21 is interposed between a circumferential shoulder groove 3 and a circumferential crown groove 5, whereas the second circumferential row 12 of lateral blocks 21 is interposed between a circumferential shoulder groove 4 and a circumferential crown groove 7.

In the embodiment of figures 1-2, the row 9 of central blocks 20 is thus interposed between a circumferential crown groove 5 and the circumferential central groove 6.

Similarly, the central row 10 of central blocks 20 is interposed between a circumferential crown groove 7 and the circumferential crown groove 6. Furthermore, the central blocks 20 of the first and second circumferential central rows 9, 10, as well as the blocks 21 of the first and second circumferential lateral rows 11, 12, are separated from one other in the circumferential direction by transverse sipes 8.

Preferably, in some embodiments such as that shown in figures 1-2, the transverse sipes 8 of each circumferential row 9, 10, 11, 12 of central blocks 20, or, respectively, of lateral blocks 21, are not circumferentially aligned with the transverse sipes 8 of the circumferential rows of axially adjacent blocks, rather they are circumferentially staggered relative to them.

The transverse sipes 8 extend with an inclination relative to the equatorial plane X-X of the tyre 1. Preferably, the transverse sipes 8 of the circumferential rows 9, 10 of central blocks 20 have an inclination opposite to one other. Also the transverse sipes 8 of the circumferential rows 11, 12 of lateral blocks 21 have an inclination opposite to one another.

Preferably, the transverse sipes 8 of the circumferential row 9 of central blocks 20 have substantially the same inclination as the transverse sipes 8 of the circumferential lateral row 11 of lateral blocks 21, and the transverse sipes 8 of the circumferential row 10 of central blocks 20 have substantially the same inclination as the transverse sipes 8 of the circumferential lateral row 12 of lateral blocks 21.

In detail, the angle of inclination of the transverse sipes 8 of the circumferential rows 9, 10, 11, 12 of central blocks 20, or, respectively, lateral blocks 21, of the tread band 2 of figure 2 relative to the equatorial plane X-X of the tyre 1 is between 90° and 140° (in absolute value).

In the tread pattern of figure 2, the crown grooves 5 and 7 have a stone-ejector formed by a circumferential row of protrusions 50 suitable for protecting the bottom of the grove itself, preventing the trapping of small stones and/or stone chippings and protecting the same against the possible triggering of tears.

In other words, the rows of protrusions 50 are arranged in the circumferential crown grooves having an axially outermost location moving axially away from the equatorial plane X-X.

Although in the embodiments shown in the figures the two rows of protrusions 50 are located in the circumferential crown grooves 5 and 7, it is in any case possible to provide them, alternatively or additionally, in the circumferential shoulder grooves 3, 4 and/or in the central circumferential crown groove 6. The circumferential row of protrusions 50 provided in the circumferential crown groove 5 and the circumferential row of protrusions 50 provided in the circumferential crown groove 7 are totally identical to each other, apart from a staggered arrangement in the circumferential direction.

Preferably, the row of protrusions 50 of the circumferential crown groove 5 is, in fact, staggered by 1/2 the pitch relative to the row of protrusions 50 provided in the circumferential crown groove 7.

For the sake of simple presentation and reading convenience, in the following description the form of such rows of protrusions 50 will be described with reference to the one provided in the circumferential crown groove 5, being understood that the same holds also for the row of protrusions 50 provided in the second circumferential crown groove 7.

As it can be seen particularly in figures 2a, 3a, 4 and 5, the protrusions 50 projects from a bottom surface 15 of the circumferential crown groove 5 and are sequentially arranged so as to extend in the circumferential direction, substantially along the whole circumferential development of the tyre.

Still referring to the embodiments shown in the figures, each protrusion 50 has at least one top surface and at least two lateral walls, which are substantially parallel to each other and substantially parallel to the lateral walls of the circumferential crown groove 5.

In the embodiments shown in the figures, the circumferential row of projections 50, considered as a whole, has therefore a circumferential course which is substantially parallel to that of the lateral walls of the circumferential crown groove 5.

In the embodiments shown in the figures the protrusions 50 of the circumferential row of protrusions are symmetrically located across the center line of the circumferential crown groove 5, but they could be asymmetrically located across the center line of the groove 5 or even spaced apart from the latter, without departing from the scope of protection of the present invention. Alternatively, the circumferential row of protrusions 50 could be formed by protrusions 50 located, individually or in groups, in different ways relative to the center line of the groove 5.

Eeach protrusion 50 has a height h₁ equal to or smaller than a depth H of the circumferential crown groove 5 in which it is provided.

Preferably, the height h₁ is between 20% and 100% of the depth (H) of the circumferential crown groove 5.

Advantageously, the height h₁ of the protrusion 50 is between 10 mm and 20 mm.

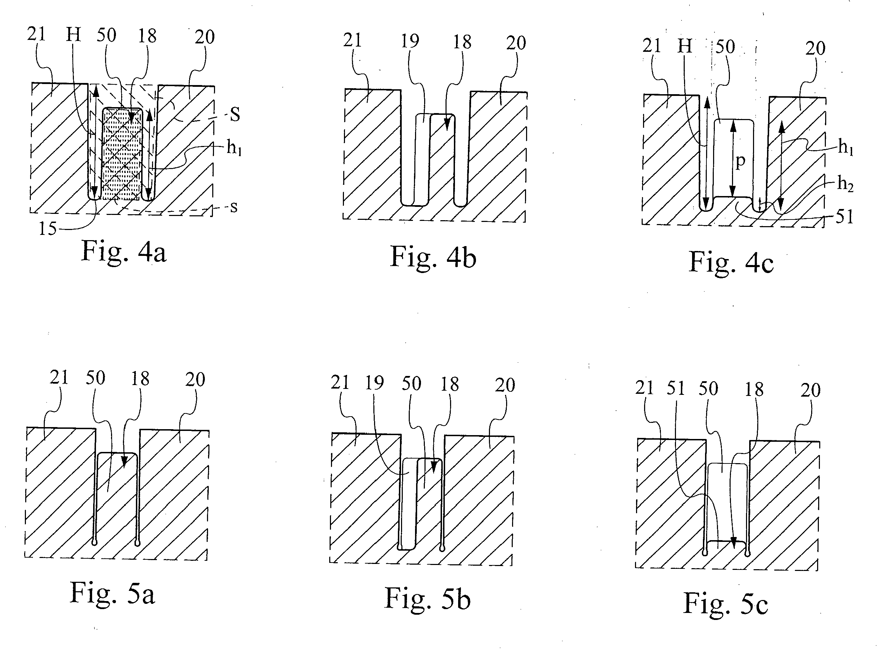

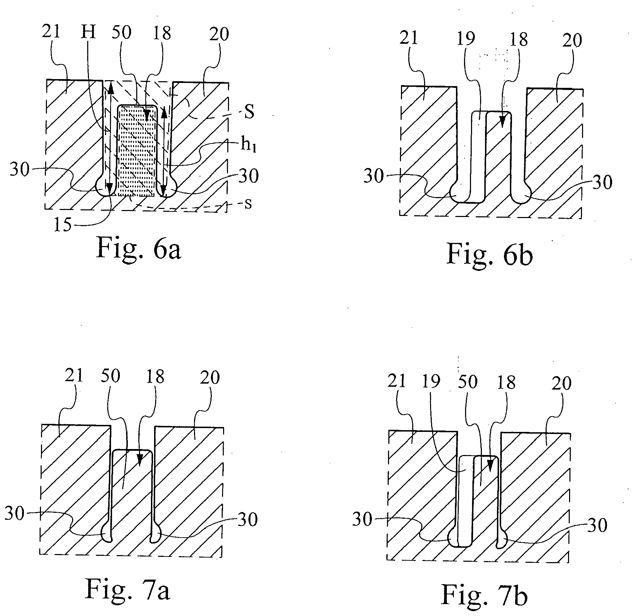

Referring to figures 4a, 6a, it can be seen that the protrusion 50 has a cross section s greater than 0,2S, where S is the cross section of the circumferential crown groove 5 measured in a lying plane common to both the cross sections. Preferably, leaving out the portions where transverse slots 17 or radial channels 19, described in more detail in the followings, are present, the protrusion 50 has a cross section s between 0,4S and 1S. Even more preferably, the groove 18 has a cross section between 0,7S and 0,8S.

The presence of a circumferential row of protrusions 50 or stone-ejector of relevant dimensions, which preferably takes up almost completely the circumferential crown groove 5, has the advantage of reducing the movements and deformations of the tread pattern, particularly in the footprint area when the opposite lateral walls of the groove tend to come into contact with those of the stone-ejector, as shown in figures 5a-5c. This causes a noticeable reduction in the rolling resistance, which is tightly linked with the deformability of the structural elements of the tread band.

On the other hand, the presence of the radial channels 19 ensures a good draining effect.

Referring to the embodiment shown in the figures, the protrusion of a same circumferential row are mutually separated in the circumferential direction by a series of transverse slots 17.

In the axial direction, the transverse slots 17 axially extend over the entire axial extension of the protrusions 50.

The number of protrusions 50 along the circumferential development of the tyre is related to the total number of pitches of the tyre and is preferably between 2 and 6 times the total number of pitches.

In the radial direction, the transverse slots 17 extend from a substantially radial plane, comprising two top surfaces of two circumferentially adjacent protrusions, by a depth p smaller than 0,6H.

Preferably, the depth p is between 2 mm and 10 mm, see figure 4c.

In the circumferential direction, the transverse slots 17 have an average width, measured along the direction of circumferential development of the rib 18, smaller than 12 mm. Preferably, said average width is greater than 1 mm, even more preferably between 2 and 10 mm.

Each protrusion 50 has a circumferential extension 11 of between 3 and 30 mm, preferably, of between 5 and 20 mm.

Each protrusion 50 has a maximum average width 12, measured in the radial direction, of between 2 and 12 mm.

Still in the attempt of obtaining a greater draining effect, the transverse slots 17 are circumferentially located at the transverse slots adapted to define the blocks 20, 21 in the adjacent circumferential rows.

The plurality of protrusions 50 further comprises a plurality of channels 19 which substantially extend in the radial direction.

Each channel 19 has at least one opening in a lateral surface or on a side of the protrusion 50 for setting the radial channel 19 and the circumferential crown groove 5 in fluid communication with each other.

In this way, the circumferential crown groove 5 is set in fluid communication with the outside of the tread.

The radial channels 19 extend from the top surface of the protrusion 50 by at least 0,2H.

In the embodiment shown in the figures, the channels 19 extend, preferably in the radial direction, from the top surface of the protrusion 50 to the bottom of the circumferential crown groove 5.

In this way, each channel 19, which thus has a substantially vertical arrangement relative to the circumferential direction of the groove, is in fluid communication with a circumferential channel, represented by the circumferential crown groove 5 itself, and water may flow in both directions. In the embodiment shown in figures 2-5, the channels 19 have a cross section which can be inscribed in a circumference having a maximum diameter dmax smaller than 11 mm.

Advantageously, the channels 19 have a cross section which can be inscribed in a circumference having a maximum diameter dmax greater than 1 mm.

The Applicant is of the opinion that the above-mentioned choices in terms of radial extension and dimensions of the channels 19 represent an optimal compromise for providing a proper flow rate for the water flowing through the channels themselves while taking into account the need of avoiding an excessive structural weakening of the protrusions 50.

Preferably, each protrusion 50 comprises a number of channels 19 between zero and six. In particular, in the embodiments shown in the figures two channels 19 are provided for each protrusion 50.

Preferably, the ratio between the number of channels and the number of protrusions overall present in a shoulder and/or crown groove is equal to or greater than 0.1, even more preferably greater than 0.5.

Preferably, the ratio between the number of channels and the number of protrusions overall present in a shoulder and/or crown groove is between 1 and 5.

For ensuring a more effective drainage in the radial direction, in the embodiment shown in the figures it can be seen that at least one channel 19, preferably both of them, is arranged so as to intersect at least one lateral wall of the protrusion 50.

Still referring to the embodiment shown in the figure, it can be seen that each protrusion 50 has two channels 19 and, according to this embodiment, the channels 19 are located, in the axial direction, on opposite sides relative to centre line of the protrusion 50.

In other words, for each protrusion 50, one channel 19 is located at a lateral wall of the protrusion 50, and the other is located close to the axially opposite lateral wall of the same protrusion 50.

In the attempt of obtaining an uniform draining behavior, in each protrusion 50 the channels 19 are circumferentially staggered.

In other words, one channel 19 is located close to a transverse slot 17, and the other channel 19 is located close to the circumferentially adjacent transverse slot 17.

Preferably, the channels 19 are located at a distance in the circumferential direction of between 2 mm and 10 mm from the transverse slot 17, whereas in each protrusion 50 each channel 19 is located at a distance in the circumferential direction of between 0,21₁ and 0,81₁ from the other one.

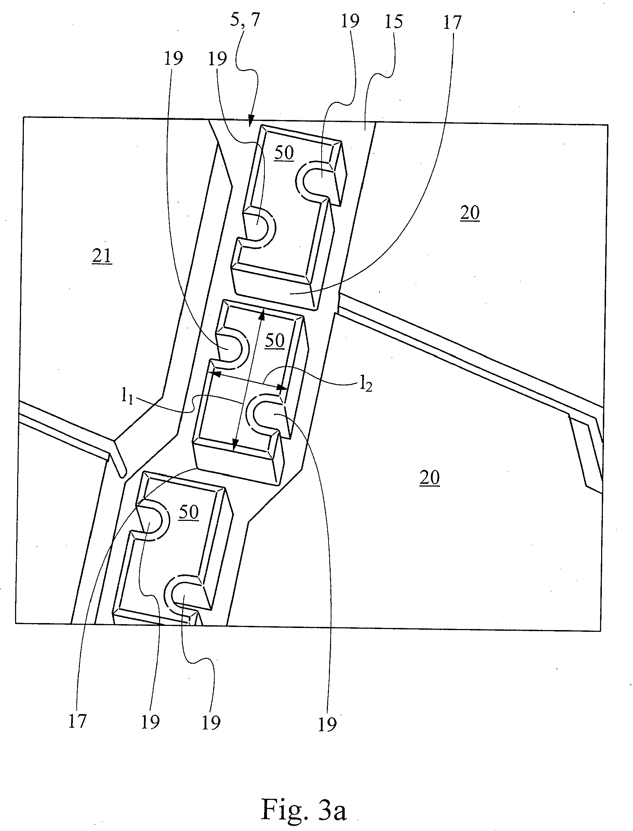

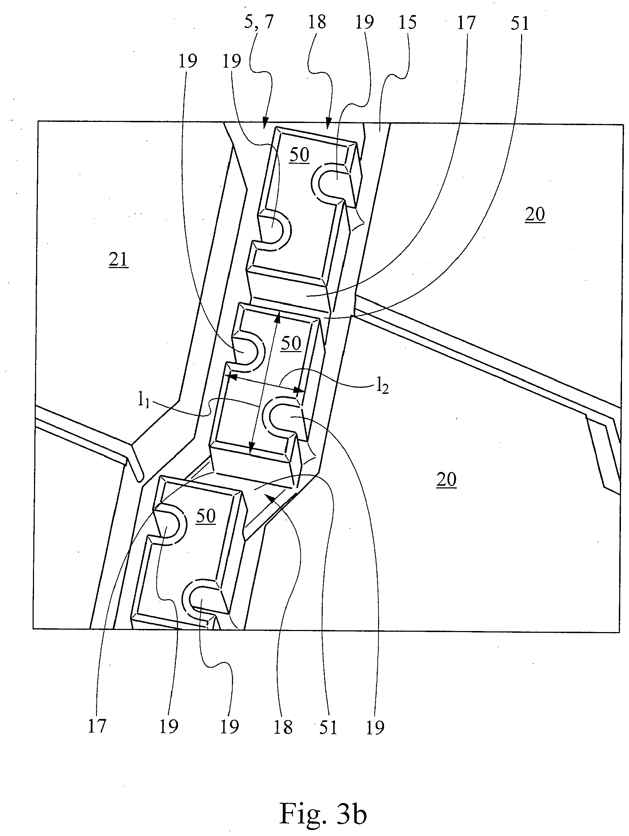

In figures 2b, 3b an embodiment of the present invention is shown wherein the circumferential crown grooves 5, 7 have a rib 18 projecting from a bottom surface 15 of the grooves themselves.

The rib 18 extends in the circumferential direction and comprises a plurality of protrusions 50.

In other words, referring to the embodiment shown in figures 2b, 3b, the rib 18 is formed by the plurality of protrusions 50 and by connecting portions 51 which connect each protrusion 50 with the circumferentially adjacent one. Preferably, the rib 18 has at least one top surface and at least two lateral walls substantially parallel to each other and substantially parallel to the lateral walls of the circumferential crown groove 5.

The top surface of the rib 18 thus coincides with the series of top surfaces of the protrusions 50 of the circumferential row of protrusions.

In the embodiment shown in the figures, therefore, the rib 18 has a circumferential course substantially parallel to that of the lateral walls of the circumferential crown groove 5. In detail, it is formed by segments substantially parallel to the equatorial plane X-X and by segments of limited extension, inclined relative to the equatorial plane X-X and arranged so as to connect with each other two segments substantially parallel to the equatorial plane X-X and substantially consecutive.

The rib 18 has overall a variable height (h) along its circumferential extension. In detail, the rib 18 has a height h equal to the height h₁ of the protrusions 50 at the location of such protrusions 50, and a height h₂ smaller than h₁ at the connecting portions 51 which connect two circumferentially adjacent protrusions (Figs 4a, 4c).

The height h₂, i.e. the height of the connecting portions 51, are determined by the depth of the slots 17; in other words, the greater is the depth p, measured in the radial direction, of the slots 17, the smaller is the height h₂, relative to the bottom of the groove, of the connecting portions 51.

The connecting portions 51 have the same axial extension as the slots 17 in the axial direction and an extension equal to the width, measured in the circumferential direction, of the transverse slots 17 in the circumferential direction.

Referring to figures 6a-6b and 7a-7b, it can be seen that the circumferential grooves provided with the circumferential rows of protrusions 50 may be provided also with at least one further channel 30, which develops in the circumferential direction.

In the followings reference will be made to the circumferential groove 5, although the same may be applied to the circumferential groove 7 or to any other circumferential groove comprising the circumferential row of protrusion 50, without departing from the scope of protection of the present invention. For increasing the draining ability of the tyre, the circumferential channel 30 is in fluid communication with at least one channel 19 of the plurality of channels.

In this way, as shown in figures 6a-6b, also in the footprint area, when the lateral walls of the groove 5 close themselves on the lateral walls of the rib 18, coming axially closer to them, it is ensured that water can flow in radial direction thanks to channels 19 and in circumferential direction thanks to channel 30.

Still referring to the embodiment shown in figures 6a-6b and 7a-7b, it can be seen that the circumferential channel 30 is located at a portion of the groove 5 comprised between the bottom of the groove and the lateral wall of the same. Advantageously, the circumferential channel 30 preferably extends over the whole circumferential development of the tyre.

In the embodiment shown in figures 6a-6b and 7a-7b, the circumferential channel 30 has an asymmetric cross section extending in an axially outer direction relative to the circumferential row of protrusions 50.

In other words, the circumferential channel 30 has a rounded cross section, e.g. it can be shaped like an half-drop with its convexity pointing axially towards the outside.

In this way, the cavity of the circumferential channel 30 formed in the tread band 8 affects the wall of the circumferential groove 5 and does not weaken structurally the circumferential row of protrusions 50.

Coming again to the tread band 2, as far as the shoulder portions L2 are concerned, in the embodiment shown in figure 2 the shoulder portion L2 has a row 13 of shoulder blocks comprising a plurality of shoulder blocks 22 separated from one another by shoulder transverse grooves 23.

Similarly, in the embodiment shown in figure 2 the shoulder portion L2 has a row 14 of shoulder blocks comprising a plurality of shoulder blocks 25 separated from each other by shoulder transverse grooves 26.

The shoulder blocks 25 of row 14 are preferably arranged so as to be circumferentially staggered relative to the shoulder blocks 22 of row 13.

In the tread pattern of figure 2, the rows 13, respectively 14, of blocks are substantially identical, leaving out the inclination of the shoulder transverse grooves 23, respectively 26. For the sake of simple presentation and reading convenience, in the remainder of the present description the circumferential row 13 of shoulder blocks 23 will be described, being understood that the same holds also for the circumferential row 14 of shoulder blocks 25 of the lateral portion L2 of the tread band 2.

The shoulder transverse grooves 23 have substantially a constant width, and even more preferably a width of between 14 mm and 28 mm, for example equal to 22 mm.

The shoulder transverse grooves 23 extend along an inclined direction relative to the equatorial plane X-X, adapted to form an angle α3 with the equatorial plane X-X.

Preferably, the transverse grooves 23 form with the equatorial plane X-X an angle α3 smaller than 90°, preferably greater than 15°, for example equal to about 75°.

Furthermore, the shoulder transverse grooves 23 preferably have a maximum depth greater than 10 mm, preferably smaller than 25 mm, for example equal to 18 mm.

The shoulder transverse grooves 23 have a depth reduction at their axially most central portion so as to define a double-step course.

Preferably, at the depth reduction the shoulder transverse grooves 23 have a depth smaller than 10 mm.

The choice of keeping the depth of the transverse grooves 23 small in the axially most central portion allows a greater strength against lateral and torsional stresses to be ensured.

In order to increase traction on snow-covered roads and drainage on wet roads, the shoulder blocks 22, 25 may be provided with sipes 30, as in the case shown in figures 1-3.

The sipes 30 may have a depth of between 1 and 5 mm, for example equal to 2 mm, and an average width of between 0 and 2 mm.

The present invention has been described with reference to some embodiments thereof. Many modifications can be made in the embodiments described in detail, still remaining within the scope of protection of the invention, defined by the following claims.

## Claims

1. Tyre (1) having a tread (2) comprising a central annular portion (L1) astride an equatorial plane (X-X) and two shoulder annular portions (L2), located on axially opposite sides relative to the central annular portion (L1), the central annular portion being separated from each shoulder annular portion by a respective circumferential shoulder groove (3, 4), wherein the central annular portion (L1) comprises at least one circumferential crown groove (5, 6, 7);
- at least one of said circumferential shoulder and/or crown grooves (3, 4, 5, 6, 7) has a plurality of protrusions (50) located along the circumferential development of said tyre;
- at least one of said protrusions (50) having a lateral surface substantially extending in a radial direction;
- each protrusion (50) having a height (h₁) equal to or smaller than a depth (H) of said at least one circumferential shoulder and/or crown groove (3, 4, 5, 6, 7);
the tyre is **characterized in that**:
- said plurality of protrusions (50) having a plurality of channels (19) substantially extending in a radial direction;
- each channel of said plurality of channels (19) having at least one opening in said lateral surface for setting said circumferential shoulder and/or crown groove (3, 4, 5, 6, 7) in fluid communication with the outside of the tread;
and **in that**
at least one of said circumferential shoulder and/or crown grooves (3, 4, 5, 6, 7) has a rib (18) projecting from a bottom surface (15) of said circumferential shoulder and/or crown grooves (3, 4, 5, 6, 7), and extending in a circumferential direction; said rib (18) comprising said plurality of protrusions (50); said rib (18) having at least one top surface and at least two lateral walls substantially parallel to each other and substantially parallel to the lateral walls of said at least one circumferential shoulder and/or crown groove (3, 4, 5, 6, 7).

2. Tyre (1) according to claim 1, wherein said protrusions (50) have at least one top surface from which at least one channel (19) of said plurality of channels (19) extends.

3. Tyre (1) according to claim 1 or 2, wherein at least one channel of said plurality of channels (19) extends from said top surface of said protrusions (50) by at least 0,2H.

4. Tyre (1) according to claim 2 or 3, wherein at least one channel of said plurality of channels (19) extends from the top surface of said protrusions (50) to a bottom of said circumferential shoulder and/or crown groove (3, 4, 5, 6, 7).

5. Tyre (1) according to any one of previous claims 1 to 4, wherein said channels (19) have a cross section which can be inscribed in a circumference having a maximum diameter dmax smaller than 11 mm.

6. Tyre (1) according to any one of previous claim 1 to 5, wherein said channels (19) have a cross section which can be inscribed in a circumference having a maximum diameter dmax greater than 1 mm.

7. Tyre (1) according to any one of claims 1 to 6, wherein in each protrusion (50) the channels (19) are arranged in an axial direction on opposite sides relative to a center line of the protrusion itself.

8. Tyre (1) according to any one of claims 1 to 7, wherein in each protrusion (50) the channels (19) are circumferentially staggered.

9. Tyre (1) according to any one of claims 1 to 8, wherein each protrusion (50) comprises a number of channels (19) between zero and six.

10. Tyre (1) according to any one of claims 1 to 9, wherein each protrusion (50) is separated from a circumferentially adjacent one by a transverse slot (17).

11. Tyre (1) according to claim 1, wherein said top surface of said rib (18) coincides with the series of the top surfaces of said protrusions (50) of the plurality of protrusions.

12. Tyre (1) according to any one of previous claims 1 to 11, wherein said rib (18) comprises a plurality of consecutive axially staggered segments.

13. Tyre (1) according to any one of previous claims 1 to 12, wherein said rib (18) comprises a plurality of consecutive segments, wherein each segment is axially staggered relative to the circumferentially adjacent segment.

14. Tyre (1) according to any one of previous claims 1 to 13, wherein at least one protrusion (50) of the plurality of protrusions has a cross section (s) greater than 0,2(S), where (S) is the cross section of said circumferential groove measured in a lying plane common to both the cross sections.

15. Tyre (1) according to any one of previous claims 1 to 14, wherein said at least one circumferential shoulder and/or crown groove (3, 4, 5, 6, 7) in which said plurality of protrusions (50) is located comprises at least one circumferential channel (30).

16. Tyre (1) according to claim 15, wherein said at least one circumferential channel (30) is in fluid communication with at least one channel (19) of the plurality of channels.

17. Tyre (1) according to claim 15 or 16, wherein said circumferential channel (30) is located at the circumferential groove portion comprised between the groove bottom and the groove lateral wall.

18. Tyre (1) according to any one of claims 15 to 17, wherein said circumferential channel (30) circumferentially extends along the whole circumferential development of the tyre.

19. Tyre (1) according to any one of claims 15 to 19, wherein said circumferential channel (30) has an asymmetric cross section extending in an axially outer direction relative to said plurality of protrusions (50).

## Patentansprüche

1. Reifen (1) mit einer Lauffläche (2) umfassend einen zentralen ringförmigen Abschnitt (L1) zu beiden Seiten einer Äquatorialebene (X-X) und zwei ringförmige Schulterabschnitte (L2), die sich auf axial gegenüberliegenden Seiten in Bezug auf den zentralen ringförmigen Abschnitt (L1) befinden, wobei der zentrale ringförmige Abschnitt von jedem ringförmigen Schulterabschnitt durch eine jeweilige umlaufende Schulternut (3, 4) getrennt ist, wobei der zentrale ringförmige Abschnitt (L1) zumindest eine umlaufende Zenithnut (5, 6, 7) umfasst;
- wobei zumindest eine der umlaufenden Schulter- und/oder Zenithnuten (3, 4, 5, 6, 7) eine Vielzahl von Vorsprüngen (50) aufweist, die entlang der umlaufenden Entwicklung des Reifens liegen;
- wobei zumindest einer der Vorsprünge (50) eine seitliche Oberfläche aufweist, die sich im Wesentlichen in einer radialen Richtung erstreckt;
- jeder Vorsprung (50) eine Höhe (h1) gleich oder kleiner als eine Tiefe (H) der zumindest einen umlaufenden Schulter- und/oder Zenithnut (3, 4, 5, 6, 7) aufweist;
wobei der Reifen **dadurch gekennzeichnet ist, dass**:
- die Vielzahl von Vorsprüngen (50) eine Vielzahl von Kanälen (19) aufweist, die sich im Wesentlichen in einer radialen Richtung erstrecken;
- ein Kanal der Vielzahl von Kanälen (19) zumindest eine Öffnung in der seitlichen Oberfläche aufweist, um die umlaufenden Schulter- und/oder Zenithnut (3, 4, 5, 6, 7) in Fluidverbindung mit der Außenseite der Lauffläche zu versetzen;
und dass
zumindest eine der umlaufenden Schulter- und/oder Zenithnuten (3, 4, 5, 6, 7) eine Rippe (18) aufweist, die von einer Bodenfläche (15) der umlaufenden Schulter- und/oder Zenithnuten (3, 4, 5, 6, 7) wegragt und sich in einer Umfangsrichtung erstreckt; wobei die Rippe (18) die Vielzahl von Vorsprüngen (50) umfasst; wobei die Rippe (18) zumindest eine obere Oberfläche und zumindest zwei Seitenwände aufweist, die im Wesentlichen parallel zueinander und im Wesentlichen parallel zu den Seitenwänden der zumindest einen umlaufenden Schulter- und/oder Zenithnut (3, 4, 5, 6, 7) sind.

2. Reifen (1) nach Anspruch 1, wobei die Vorsprünge (50) zumindest eine obere Oberfläche aufweisen, von welcher sich zumindest ein Kanal (19) der Vielzahl von Kanälen (19) erstreckt.

3. Reifen (1) nach Anspruch 1 oder 2, wobei zumindest ein Kanal der Vielzahl von Kanälen (19) sich von der oberen Oberfläche der Vorsprünge (50) um zumindest 0,2H erstreckt.

4. Reifen (1) nach Anspruch 2 oder 3, wobei zumindest ein Kanal der Vielzahl von Kanälen (19) sich von der oberen Oberfläche der Vorsprünge (50) zu einem Boden der umlaufenden Schulter- und/oder Zenithnut (3, 4, 5, 6, 7) erstreckt.

5. Reifen (1) nach einem der vorhergehenden Ansprüche 1 bis 4, wobei die Kanäle (19) einen Querschnitt aufweisen, der in einen Umfang mit einem maximalen Durchmesser dmax kleiner als 11 mm eingeschrieben werden kann.

6. Reifen (1) nach einem der vorhergehenden Ansprüche 1 bis 5, wobei die Kanäle (19) einen Querschnitt aufweisen, der in einen Umfang mit einem maximalen Durchmesser dmax größer als 1 mm eingeschrieben werden kann.

7. Reifen (1) nach einem der Ansprüche 1 bis 6, wobei in jedem Vorsprung (50) die Kanäle (19) in einer axialen Richtung auf gegenüberliegenden Seiten in Bezug auf eine Mittellinie des Vorsprungs selbst angeordnet sind.

8. Reifen (1) nach einem der Ansprüche 1 bis 7, wobei in jedem Vorsprung (50) die Kanäle (19) in Umfangsrichtung versetzt sind.

9. Reifen (1) nach einem der Ansprüche 1 bis 8, wobei jeder Vorsprung (50) eine Anzahl von Kanälen (19) zwischen null und sechs umfasst.

10. Reifen (1) nach einem der Ansprüche 1 bis 9, wobei jeder Vorsprung (50) von einem ihm in Umfangsrichtung benachbarten durch einen Querschlitz (17) getrennt ist.

11. Reifen (1) nach Anspruch 1, wobei die obere Oberfläche der Rippe (18) mit der Reihe von oberen Oberflächen der Vorsprünge (50) der Vielzahl von Vorsprüngen zusammenfällt.

12. Reifen (1) nach einem der vorhergehenden Ansprüche 1 bis 11, wobei die Rippe (18) eine Vielzahl von aufeinander folgenden, axial versetzten Segmenten umfasst.

13. Reifen (1) nach einem der vorhergehenden Ansprüche 1 bis 12, wobei die Rippe (18) eine Vielzahl von aufeinander folgenden Segmenten umfasst, wobei jedes Segment in Bezug auf das in Umfangsrichtung benachbarte Segment axial versetzt ist.

14. Reifen (1) nach einem der vorhergehenden Ansprüche 1 bis 13, wobei zumindest ein Vorsprung (50) der Vielzahl von Vorsprüngen einen Querschnitt (s) größer als 0,2(S) aufweist, wobei (S) der Querschnitt der umlaufenden Nut gemessen in einer liegenden Ebene ist, die beiden Querschnitten gemeinsam ist.

15. Reifen (1) nach einem der vorhergehenden Ansprüche 1 bis 14, wobei die zumindest eine umlaufende Schulter- und/oder Zenithnut (3, 4, 5, 6, 7), in der sich die Vielzahl von Vorsprüngen (50) befindet, zumindest einen umlaufenden Kanal (30) umfasst.

16. Reifen (1) nach Anspruch 15, wobei der zumindest eine umlaufende Kanal (30) in Fluidverbindung mit zumindest einem Kanal (19) der Vielzahl von Kanälen steht.

17. Reifen (1) nach Anspruch 15 oder 16, wobei der umlaufende Kanal (30) sich an dem Abschnitt der umlaufenden Nut befindet, die zwischen dem Nutboden und der Nutseitenwand liegt.

18. Reifen (1) nach einem der Ansprüche 15 bis 17, wobei der umlaufende Kanal (30) sich in Umfangsrichtung entlang der gesamten umlaufenden Entwicklung des Reifens erstreckt.

19. Reifen (1) nach einem der Ansprüche 15 bis 19, wobei der umlaufende Kanal (30) einen asymmetrischen Querschnitt aufweist, der sich in einer axial äußeren Richtung in Bezug auf die Vielzahl von Vorsprüngen (50) erstreckt.

## Revendications

1. Pneu (1) ayant une bande de roulement (2) comprenant une partie annulaire centrale (L1) située à cheval sur un plan équatorial (X-X) et deux parties annulaires d'épaulement (L2), situées sur des côtés opposés axialement par rapport à la partie annulaire centrale (L1), la partie annulaire centrale étant séparée de chaque partie annulaire d'épaulement par une rainure circonférentielle d'épaulement respective (3, 4), où la partie annulaire centrale (L1) comprend au moins une rainure circonférentielle de sommet (5, 6, 7) ;
- au moins l'une desdites rainures circonférentielles d'épaulement et/ou de sommet (3, 4, 5, 6, 7) a une pluralité de saillies (50) située le long du développement circonférentiel dudit pneu ;
- au moins l'une desdites saillies (50) ayant une surface latérale s'étendant essentiellement dans une direction radiale ;
- chaque saillie (50) ayant une hauteur (h₁) inférieure ou égale à une profondeur (H) de ladite au moins une rainure circonférentielle d'épaulement et/ou de sommet (3, 4, 5, 6, 7) ;
le pneu est **caractérisé en ce que** :
- ladite pluralité de saillies (50) ayant une pluralité de canaux (19) s'étendant essentiellement dans une direction radiale ;
- chaque canal de ladite pluralité de canaux (19) ayant au moins une ouverture dans ladite surface latérale pour établir une communication fluidique entre ladite rainure circonférentielle d'épaulement et/ou de sommet (3, 4, 5, 6, 7) et l'extérieur de la bande de roulement ;
et **en ce que**
au moins l'une desdites rainures circonférentielles d'épaulement et/ou de sommet (3, 4, 5, 6, 7) a une nervure (18) faisant saillie à partir d'une surface inférieure (15) desdites rainures circonférentielles d'épaulement et/ou de sommet (3, 4, 5, 6, 7), et s'étendant dans une direction circonférentielle ;
ladite nervure (18) comprenant ladite pluralité de saillies (50) ; ladite nervure (18) ayant au moins une surface supérieure et au moins deux parois latérales essentiellement parallèles l'une à l'autre et essentiellement parallèles aux parois latérales de ladite au moins une rainure circonférentielle d'épaulement et/ou de sommet (3, 4, 5, 6, 7).

2. Pneu (1) selon la revendication 1, dans lequel lesdites saillies (50) ont au moins une surface supérieure à partir de laquelle s'étend au moins un canal (19) de ladite pluralité de canaux (19).

3. Pneu (1) selon la revendication 1 ou 2, dans lequel au moins un canal de ladite pluralité de canaux (19) s'étend à partir de ladite surface supérieure desdites saillies (50) d'au moins 0,2H.

4. Pneu (1) selon la revendication 2 ou 3, dans lequel au moins un canal de ladite pluralité de canaux (19) s'étend de la surface supérieure desdites saillies (50) jusqu'à une partie inférieure de ladite rainure circonférentielle d'épaulement et/ou de sommet (3, 4, 5, 6, 7) .

5. Pneu (1) selon l'une quelconque des revendications précédentes 1 à 4, dans lequel lesdits canaux (19) ont une section transversale qui peut être inscrite dans une circonférence ayant un diamètre maximal dmax inférieur à 11 mm.

6. Pneu (1) selon l'une quelconque des revendications précédentes 1 à 5, dans lequel lesdits canaux (19) ont une section transversale qui peut être inscrite dans une circonférence ayant un diamètre maximal dmax supérieur à 1 mm.

7. Pneu (1) selon l'une quelconque des revendications 1 à 6, dans lequel, dans chaque saillie (50), les canaux (19) sont agencés dans une direction axiale sur des côtés opposés par rapport à une ligne centrale de la saillie elle-même.

8. Pneu (1) selon l'une quelconque des revendications 1 à 7, dans lequel, dans chaque saillie (50), les canaux (19) sont décalés de manière circonférentielle.

9. Pneu (1) selon l'une quelconque des revendications 1 à 8, dans lequel chaque saillie (50) comprend un nombre de canaux (19) compris entre zéro et six.

10. Pneu (1) selon l'une quelconque des revendications 1 à 9, dans lequel chaque saillie (50) est séparée d'une saillie adjacente de manière circonférentielle par une fente transversale (17).

11. Pneu (1) selon la revendication 1, dans lequel ladite surface supérieure de ladite nervure (18) coïncide avec la série des surfaces supérieures desdites saillies (50) de la pluralité de saillies.

12. Pneu (1) selon l'une quelconque des revendications précédentes 1 à 11, dans lequel ladite nervure (18) comprend une pluralité de segments consécutifs décalés axialement.

13. Pneu (1) selon l'une quelconque des revendications précédentes 1 à 12, dans lequel ladite nervure (18) comprend une pluralité de segments consécutifs, où chaque segment est décalé axialement par rapport au segment adjacent de manière circonférentielle.

14. Pneu (1) selon l'une quelconque des revendications précédentes 1 à 13, dans lequel au moins une saillie (50) de la pluralité de saillies a une section transversale (s) supérieure à 0,2(S), où (S) représente la section transversale de ladite rainure circonférentielle mesurée dans un plan horizontal commun aux deux sections transversales.

15. Pneu (1) selon l'une quelconque des revendications précédentes 1 à 14, dans lequel ladite au moins une rainure circonférentielle d'épaulement et/ou de sommet (3, 4, 5, 6, 7) dans laquelle ladite pluralité de saillies (50) est située comprend au moins un canal circonférentiel (30).

16. Pneu (1) selon la revendication 15, dans lequel ledit au moins un canal circonférentiel (30) est en communication fluidique avec au moins un canal (19) de la pluralité de canaux.

17. Pneu (1) selon la revendication 15 ou 16, dans lequel ledit canal circonférentiel (30) est situé au niveau de la partie de rainure circonférentielle comprise entre la partie inférieure de rainure et la paroi latérale de rainure.

18. Pneu (1) selon l'une quelconque des revendications 15 à 17, dans lequel ledit canal circonférentiel (30) s'étend de manière circonférentielle le long de tout le développement circonférentiel du pneu.

19. Pneu (1) selon l'une quelconque des revendications 15 à 19, dans lequel ledit canal circonférentiel (30) a une section transversale asymétrique s'étendant dans une direction axialement externe par rapport à ladite pluralité de saillies (50).
